# EUROPÄISCHE PATENTSCHRIFT

(11) **EP 1 676 816 B1**
(45) Veröffentlichungstag und Bekanntmachung des Hinweises auf die Patenterteilung: **03.03.2010**
(21) Anmeldenummer: 04031075.7
(22) Anmeldetag: 31.12.2004
(51) Int. Cl.: C02F 3/08, C02F 3/20

(54) **Einrichtung zur aeroben biologischen Reinigung von Abwässern**
Apparatus for the aerobic biological treatment of waste waters
Dispositif pour le traitement biologique aérobie d'eaux usées

(43) Veröffentlichungstag der Anmeldung: 05.07.2006
(73) Patentinhaber: Stähler, Theo, 65589 Hadamar-Niederzeuzheim (DE); Stähler, Hubertus, 65589 Hadamar-Niederzeuzheim (DE)
(72) Erfinder: Stähler, Theo, 65589 Hadamar-Niederzeuzheim (DE); Stähler, Hubertus, 65589 Hadamar-Niederzeuzheim (DE)
(74) Vertreter: Quermann, Helmut

(56) Entgegenhaltungen:
- EP-A- 0 014 453
- EP-A- 0 853 067
- US-A- 3 886 074
- US-A- 4 668 387
- US-A- 5 326 459
- US-A- 5 755 961

## Beschreibung

Die Erfindung betrifft eine Einrichtung zur aeroben biologischen Reinigung von Abwässern, mit einem Becken zur Aufnahme des Abwassers, einem im Becken um eine horizontale Achse drehbaren Rad, wobei das Rad eine Vielzahl von in Umfangsrichtung und axial hintereinander angeordneten Kammern aufweist, wobei jede Kammer mit einer Öffnung versehen ist, die im oberen Totpunkt des Rades aus dem Abwasser auftaucht und nach oben gerichtet ist, sowie im unteren Totpunkt des Rades in das Abwasser eingetaucht und nach unten gerichtet ist.

Derartige Einrichtungen zu aeroben biologischen Reinigung von Abwässern nach dem sogenannten kombinierten Tauchkörper-Belebungsverfahren sind aus dem Stand der Technik vielfältig bekannt.

Hierbei erfolgt die Abwasserreinigung zum einen durch den freischwebenden Belebtschlamm (suspendierte Biomasse), zum anderen durch festhaftende Mikroorganismen auf den durch die Wandungen der Kammern gebildeten rotierenden Tauchkörper-Bewuchsflächen (sessile Biomasse). Damit wird die Wirkung des Belebtschlamm-Verfahrens mit der des Tauchkörper-Verfahrens in einer Einheit vereinigt.

Als bevorzugte Bauformen dieses kombinierten Verfahrens finden Zellräder und Röhrenräder Verwendung.

Das Zellrad mit Zellsegmenten wird aus mehreren, parallel zur Achse angeordneten Kunststoffsegmenten zusammengesetzt. Diese bestehen aus einer Vielzahl von profilierten Polypropylen-Platten. Ihre bezeichnenden Eigenschaften sind die Ausprägung von Kammern (Zellsegmenten), die dem Lufteintrag beim Eintauchen der Kammer in das Abwasser sowie der Vergrößerung der Besiedelungsoberflächen dienen. Sie gewährleisten die Sauerstoff-Versorgung entsprechend den Anforderungen.

Das Röhrenrad ist in seiner Funktion dem Zellrad identisch. Die Besiedelungsfläche und das Volumen der Luftkammern sind jedoch kleiner. Die veränderte Bauform resultiert aus der konkreten Aufgabenstellung des Anwendungsfalles. Die Röhren sind an der Peripherie des Rades parallel zur Achse angeordnet. Sie sind aus zusammengefügten Kunststoffscheiben gebaut.

Es ist bekannt, das drehbare Rad mit einem Paddel auszustatten. Dieses dient der Durchmischung des Abwassers beim Drehen des Rades im Becken.

Angetrieben werden Zellrad bzw. Röhrenrad mittels eines Elektromotors über ein Getriebe, das auf die zentrale Lagerwelle des Rades einwirkt.

Eine Einrichtung der Eingangs genannten Art unter Verwendung eines Röhrenrades ist aus der DE 25 44 177 C2 und der DE-OS 26 38 665 bekannt. Eine Einrichtung unter Verwendung eines Zellrades ist in der DE 34 11 865 C2 und der EP 0 881 990 B1 beschrieben. Bezüglich des weiteren Standes der Technik wird auf die EP 1 338 566 A1 verwiesen.

Nachteilig ist bei den bekannten Einrichtungen der recht große bauliche Aufwand im Zusammenhang mit dem Antrieb, der durch den Elektromotor und dessen Lagerung sowie das Zusammenwirken von Elektromotor und Getriebe sowie Getriebe und Rad erforderlich ist. Dies bedingt überdies einen hohen Wartungsaufwand für den Antrieb des Rades. Von Nachteil ist ferner, dass nur Luft, die beim Eintauchen der Kammern in das Abwasser mittels der Kammern unter die Wasseroberfläche gedrückt wird, zum Reinigungsprozess des Abwassers beiträgt, wobei diese Luft aber bereits dann, wenn die Kammer über den unteren Totpunkt hinaus bewegt ist, aus der Kammer entweicht und zurück zur Wasseroberfläche gelangt.

Zum Stand der Technik ist es ferner bekannt, das Rad aus einer Vielzahl von in Abstand zueinander angeordneter Scheiben- oder Wabentauchkörper zu bilden, die somit keine Kammern und, abgesehen von den Öffnungen, keine geschlossenen Räume bilden. Insofern kann bei einem solchen Wabentauchkörper auch keine Kompression der Luft erfolgen.

In der US-A-5,755,961 ist ein Aquariumsystem beschrieben, mit einer Einrichtung zum Fördern eines Wassers durch das System und zum Unterstützen des bakteriellen Wachstums. Hierbei weist eine Behandlungseinheit einen Behälter für Wasser und eine Vorrichtung zum Bewegen des Wasser auf. Diese Vorrichtung ist als Rad ausgebildet, die am Umfang mit Luftfangmitteln versehen ist. Unterhalb des Rades ist im Bereich der in das Wasser eingetauchten, aufsteigenden Luftfangelemente eine Ausgabeöffnung einer Luftleitung platziert, so dass die aus dieser ausgegebene, aufsteigende Luft in die Luftfangmittel eintritt und demzufolge das Rad gedreht wird. Das Rad besitzt einen ersten hohlen Abschnitt und einen zweiten Abschnitt, der dem Verdrängen des Wassers dient und einen biologischen Filter zum Fördern des bakteriellen Wachstums aufweist. Beim Drehen des Rades taucht der zweite Abschnitt des Rades in das Wasser ein und bewirkt eine Erhöhung des Wasserspiegels im Behälter. Das Wasser kann infolgedessen über eine Überlaufschwelle den Behälter verlassen. Sobald der zweite Abschnitt wieder aus dem Wasser aufgetaucht ist, stellt sich wieder der niedrigere Wasserspiegel im Behälter ein, mit der Konsequenz, dass Wasser aus dem System in den Behälter einströmt. Bei fortlaufender Drehung des Rades ergibt sich so eine Förderung des Wassers durch das System. Das Rad taucht bei aus dem Wasser aufgetauchtem zweiten Abschnitt ungefähr zur Hälfte in das im Behälter befindliche Wasser ein.

In der US-A-3,886,074 ist eine Einrichtung zur biologischen Behandlung von Abwasser beschrieben. Dort wird ein radförmiger Tauchkörper, der weniger als die Hälfte seines Durchmessers in in einem Behälter befindliches Abwasser eintaucht, mittels Luft in Drehung um eine horizontale Achse versetzt. Die Luft wird unterhalb des Tauchkörpers, hinter dessen unterem Totpunkt aus einer Luftleitung ausgegeben und tritt in taschenförmige Teile ein, die am Umfang des Rades angeordnet sind.

In der US-A-4,668,387 ist eine Vorrichtung zum Behandeln von Abwasser beschrieben, die gleichfalls einen Tauchkörper zeigt, der um eine horizontale Achse in einem mit Abwasser gefüllten Becken drehbar ist. Es wird vorgeschlagen, dass der Tauchkörper vollständig in das Abwasser eintaucht und mittels Druckluft angetrieben wird, die im in einem unteren Bereich des den Tauchkörper aufnehmenden Beckens zugeführt wird.

Die EP-A-14 453 offenbart einen Tauchtropfkörper mit Kammern, denen ein Sauerstoff enthaltendes Gas zugeführt wird, so dass der Tauchtropfkörper gedreht wird.

Aufgabe der Erfindung ist es, eine Einrichtung der Eingangs genannten Art so weiterzubilden, dass sie einen konstruktiv besonders einfach gestalteten und wartungsarmen Antrieb für das Rad aufweist, und ein besonders hoher Wirkungsgrad der Abwasserreinigung zu verzeichnen ist.

Gelöst wird die Aufgabe bei einer Einrichtung der Eingangs genannten Art dadurch, dass ein Luftantrieb für das Rad vorgesehen ist, wobei die Luft unterhalb des Rades aus einer Luftleitung ausgegeben wird, derart, dass sie, bezogen auf die Drehrichtung des Rades, hinter dessen unterem Totpunkt in die Kammern eintrifft, sowie mit der jeweiligen Kammer ein radial nach außen gerichtetes Formteil verbunden ist, das von der Luftleitung ausgegebene Luft in die Öffnung dieser Kammer oder in die Öffnung der zu dieser Kammer vorlaufenden Kammer leitet.

Statt die Luft mittels der Kammern ausschließlich in das Wasser einzutragen wird, wird nunmehr, gemäß der Erfindung, Luft durch den Luftantrieb von unten ausgegeben, so dass diese Luft auf das Rad auftrifft und in die der Luftleitung zugewandten Kammern einströmt. Für den biologischen Reinigungsprozess steht somit nicht nur mittels der Kammern in das Wasser eingetragene Luft zur Verfügung, sondern auch die aus der Luftleitung ausgegebene Luft, die einen Auftrieb der Kammern beim Bewegen in Richtung der Wasseroberfläche erzeugt. Es wird als besonders vorteilhaft angesehen, wenn das Verhältnis von Eintragsluft zu Auftriebsluft 1/3 zu 2/3 ist. Die Ein- sowie Auftriebsluft befindet sich komprimiert in der jeweiligen Kammer und wirkt auf die Bewuchsflächen/den biologischen Rasen, der in der Kammer gebildet ist.

Erfindungsgemäß ist somit kein elektrischer Antrieb, geschweige denn ein Getriebe zum Übersetzen der Drehbewegung des Elektromotors auf das Rad erforderlich. Es reicht ein einfaches Gebläse aus, das der Luftleitung zuführt und die Luft von dort in Richtung des Rades ausgegeben wird. Aufgrund des neuen Antriebskonzeptes kann das Rad wesentlich leichter ausgeführt werden. Es entfallen die relativ schweren Bauteile für das Getriebe, beispielsweise Ritzel, Zahnkranz und Kette. Gerade diese erfindungsgemäß nicht mehr vorgesehenen Bauteile sind Verschleißteile. Aufgrund des Luftantriebs und des damit einhergehenden Auftriebs wird das Rad insgesamt leichter. Es kann deshalb einfacher dimensioniert werden. Auch hierdurch wird der bauliche Aufwand bei der Herstellung des Rades wesentlich reduziert und es kann das Rad billiger hergestellt werden. Letztendlich ist es, im Gegensatz zum Stand der Technik, nur erforderlich, die Achse des Rades in Lagerbuchsen zu lagern. Diese sind die einzigen Verschleißteile.

Von Vorteil ist ferner, dass die Luft mit erhöhtem Druck ausgegeben wird und somit komprimiert in die jeweilige Kammer gelangt. Im komprimiertem Zustand kann das Abwasser einen höheren Anteil Sauerstoff aufnehmen.

Wesentlich ist bei der vorliegenden Erfindung, dass der wesentliche Teil der Luft definiert den Kammern zugeleitet wird, Beispielsweise wurden 80 - 90 % der ausgegebenen Luft in die Kammern geleitet, 10 - 20 % gelangen an den Kammern vorbei und dienen der Durchmischung des Abwassers im Becken. Dem mit der jeweiligen Kammer verbundenen Formteil kommt hierbei die Aufgabe zu, die aus der Luftleitung ausgegebene Luft weitgehend in diejenige Kammer, mit der das Formteil verbunden ist, zu leiten, oder aber in die zu dieser Kammer in Umlaufrichtung des Rades vorlaufende Kammer. Besonders einfach lässt sich das Rad gestalten, wenn das Formteil mit derjenigen Kammer verbunden ist, in deren Öffnung die Luft mittels dieses Formteils geleitet werden soll. In diesem Fall bilden die Kammer und das Formteil eine Baueinheit, bei der das Formteil in Richtung dieser Öffnung gerichtet ist. Von besonderem Vorteil ist es, wenn das Formteil die Öffnung überlappt und ein Auffangraum für die Druckluft zwischen dem Körper und dem Formteil gebildet ist. Dieser Auffangraum bildet gleichzeitig einen Rückhalteraum für einen wesentlichen Teil der Luft beim Aufsteigen der Kammer infolge der Drehbewegung des Rades.

Leitet das mit der Kammer verbundene Formteil die Luft in die Öffnung der zu dieser Kammer vorlaufenden Kammer, wird es als vorteilhaft angesehen, wenn dieses Formteil, bei Aufgabe der Luft auf das Formteil, in vertikaler Flucht gesehen, die Öffnung der vorlaufenden Kammer überlappt. Auf diese Art und Weise wird ein wesentlicher Teil der Luft vom Formteil in die Öffnung der vorlaufenden Kammer geleitet.

Die Kammer und das Formteil sollten geometrisch so ausgelegt sein, dass die mit Luft beaufschlagte Kammer etwa zu 30 % bis 80 % ihres Kammervolumens mit Luft gefüllt ist.

Ein weiterer wesentlicher Vorteil der Erfindung mit Lufteintrag und Luftauftrieb ist darin zu sehen, dass das Rad wesentlich tiefer in das Abwasser eintauchen kann, als dies bei den aus dem Stand der Technik bekannten Einrichtungen der Fall ist. Während bei herkömmlichen Einrichtungen ein erheblicher Anteil des Raddurchmessers erforderlich ist, der aus dem im Becken befindlichen Abwasser auftaucht, reicht es bei der erfindungsgemäßen Einrichtung durchaus aus, wenn das Rad nur mit 5 % bis 15 %, insbesondere 10 % seines Raddurchmessers über den Wasserspiegel des im Becken befindlichen Abwassers ragt.

Die Luft kann den Kammern auf unterschiedlichste Art und Weise zugeführt werden. Eine besonders einfache Gestaltung sieht vor, dass die Luftleitung parallel zur Drehachse des Rades angeordnet ist und sich im wesentliche über die axiale Länge des Rades erstreckt, wobei die Luftleitung mit einer Mehrzahl von Ausgabeöffnung an zur Ausgabe der Luft über die Länge der Luftleitung versehen ist.

Es kann jeder geeignete Luftantrieb Verwendung finden, beispielsweise ein Gebläse. Es reicht aus, wenn diese Luft mit einem Druck von 0,3 - 1,0 bar erzeugt. Dieser ist in Abhängigkeit vom Durchmesser des Rades und dessen Eintauchtiefe zu wählen. Dieser Druck kann den Druck der entgegenstehenden Wassersäule überwinden. Die vom Luftantrieb ausgegebene Luft wird in den Kammern gelangen und es bleibt die Komprimierung bis zum Auftauchen der Kammer erhalten.

Die Hohlkörper zur Bildung der Kammern können beliebig gestaltet sein, z. B. runden, eckigen, insbesondere viereckigen oder dreieckigen Querschnitt aufweisen.

Gemäß einer Sonn- und Ausführungsform der Erfindung sind die Kammern durch eine Vielzahl ineinander gesteckter Kunststoffplatten gebildet, wobei die benachbarte Kunststoffplatten die jeweilige Kammer bilden. Es wird als besonders vorteilhaft angesehen, wenn die jeweiligen Kunststoffplatte und das Formteil ein Bauteil bilden. Insbesondere ist dieses Bauteil gegossen.

In den Figuren ist die Erfindung anhand mehrerer Ausführungsformen beispielsweise dargestellt, ohne auf diese beschränkt zu sein.

Es zeigt:
- Figur 1: die erfindungsgemäße Einrichtung für eine als Röhrenrad ausgebildete Ausführungsform, in einer Schnittdarstellung gemäß der Linie I-I in Figur 2,
- Figur 2: eine Ansicht der in Figur 1 gezeigten Einrichtung, in Richtung des Pfeils II gemäß Figur 1 gesehen,
- Figur 3: einen Schnitt durch eine Kunststoffscheibe, wobei durch Zusammenfügen einer Vielzahl von Kunststoffscheiben eine Röhre des Röhrenrades gebildet ist, veranschaulicht in einem Schnitt gemäß der Linie III-III in Figur 2,
- Figur 4: eine zweite Ausführungsform der erfindungsgemäßen Einrichtung für ein modifiziertes Röhrenrad, veranschaulicht in einer Schnittdarstellung gemäß der Linie IV-IV in Figur 5,
- Figur 5: die in Figur 4 gezeigte Einrichtung in einer Ansicht V gemäß Figur 4,
- Figur 6: eine dritte Ausführungsform der erfindungsgemäßen Einrichtung, die statt eines Röhrenrades ein Zellrad aufweist, in einem Schnitt gemäß der Linie VI-VI in Figur 7 und
- Figur 7: eine Ansicht der in Figur 6 gezeigten Einrichtung in Richtung des Pfeils VII in Figur 6 gesehen.

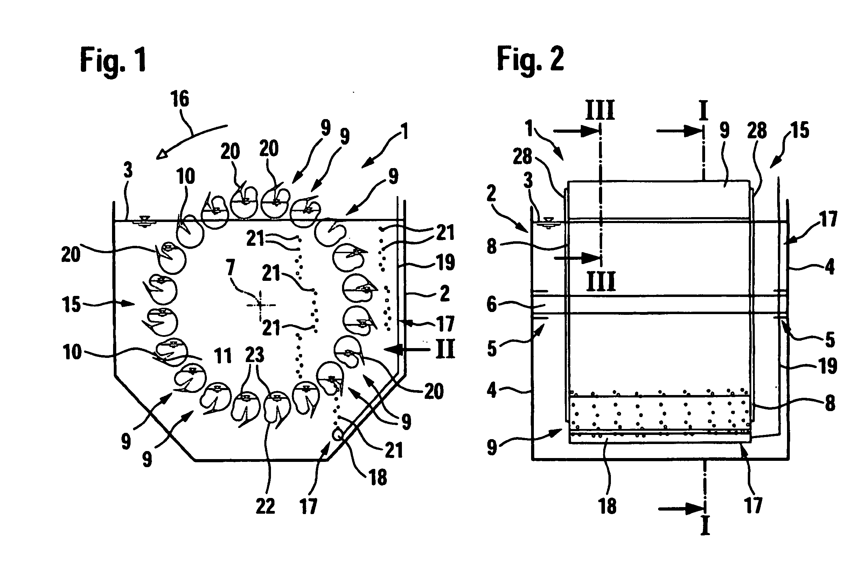

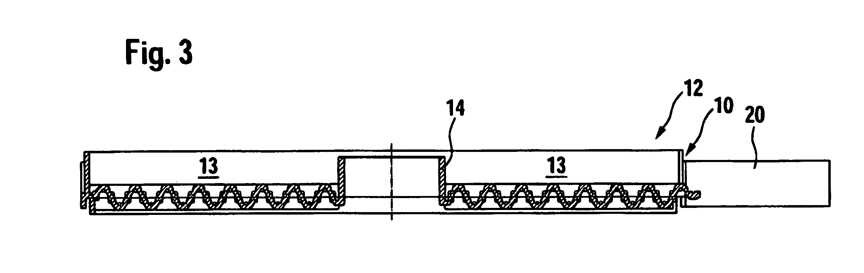

Bezüglich der ersten Ausführungsform des Röhrenrades ist in den Figuren 1 bis 3 die Einrichtung 1 zur aeroben biologischen Reinigung von Abwasser veranschaulicht, das sich in einem Becken 2 befindet. Der Wasserspiegel des Abwassers im Becken 2 ist mit der Bezugsziffer 3 bezeichnet. Die beiden Seitenwände 4 des Beckens 2 nehmen Lagerschalen 5 für eine in dieser drehbar gelagerte Welle 6 auf, die um die Achse 7 drehbar ist. Drehfest mit der Welle 6 sind Speichen 8 und mit diesen Endplatten 28 verbunden. Die Endplatten nehmen eine Vielzahl von Röhren 9 im Bereich deren kreisförmigen Endsigmenten auf, im Ausführungsbeispiel zwanzig Röhren 9. Jede Röhre 9 weist im wesentlichen kreisförmigen Querschnitt auf. Auf der radial äußeren Seite ist die jeweilige Röhre 9 mit einer Öffnung 10 versehen, deren Ausdehnung, bezogen auf den in Figur 1 veranschaulichten Kreisbogen-Abschnitt der Röhre 9 durch den strichlierten Winkel 11 veranschaulicht ist. Eine jeweilige Röhre 9 ist aus einer Vielzahl ineinander gesteckter Kunststoffplatten, von denen eine Kunststoffplatte 12 in der Figur 3 veranschaulicht ist, gebildet. Zwischen jeweils benachbarten Kunststoffplatten 12 ist die jeweilige Öffnung 10 gebildet, die somit eine Erstreckung in Längsrichtung der Welle 6 aufweist, die dem Abstand der benachbarten Kunststoffplatten 12 im Bereich der Öffnung 10 entspricht. In der Figur 3 ist die Öffnung 10 veranschaulicht, nicht aber die im Bereich dieser Öffnung 10 anzuordnende, mit der gezeigten Kunststoffplatte 12 zusammenwirkende, andere, identische Kunststoffplatte.

Die Kunststoffplatten können beliebig gestaltet sein, beispielsweise rund, eckig, insbesondere drei- oder viereckig.

Aufgrund der ineinander gesteckten Kunststoffplatten 12 ergibt sich die jeweilige Röhre 9 mit der zwischen jeweils benachbarten Kunststoffplatten 12 gebildeten Kammer 13. Den zentralen Flansch 14 der jeweiligen Kunststoffplatte 12 durchsetzt eine nicht veranschaulichte Lagerwelle, die im Bereich ihrer beiden Stirnseiten mit den Seitenwänden 4 verbunden ist. Die Lagerwelle ist drehfest mit den Endplatten 28 und Speichen 8 der Pakete verbunden und nimmt drehfest die Kunststoffplatten 12 auf, so dass die jeweiligen Öffnungen 10 der jeweiligen Röhre 9 immer, bezogen auf die Achse 7, radial nach außen gerichtet sind.

Die Drehrichtung des aus den Röhren 9, den Endplatten 28/Speichen 8 und der Welle 6 gebildeten Röhrenrades 15 ist mit der Bezugsziffer 16 veranschaulicht und erfolgt, auf die Darstellung der Figur 1 bezogen, entgegen dem Uhrzeigersinn.

Die Einrichtung 1 dient der Belüftung des Abwassers. Durch den in der Luft enthaltenen Sauerstoff werden die in dem Abwasser enthaltenen Schadstoffe, soweit diese durch den Sauerstoff der Luft zersetzbar sind, in unschädliche Stoffe umgesetzt. Da die Kunststoffplatten 12 Vertiefungen bzw. Erhöhungen aufweisen, wobei deren Tiefe bzw. Höhe wesentlich geringer ist als der Abstand benachbarter Scheiben, ergibt sich eine große luft- und wasserzugängliche Oberfläche der Kunststoffplatten. Dies hat zur Folge, dass an diesen Stellen sich nach relativ kurzer Zeit ein biologischer Rasen aus Mikroorganismen bildet.

In dem in der Figur 1 dargestellten Füllstand ragt das Röhrenrad 15 etwa zu 10 % seines Durchmessers aus der Flüssigkeit heraus.

Angetrieben wird das Röhrenrad 15 mittels eines Luftantriebs 17. Dieser weist eine als gelochtes bzw. perforiertes Rohr ausgebildete Luftleitung 18 auf, die parallel zur Welle 6 des Röhrenrades 15 angeordnet ist und sich im wesentlichen über die axiale Länge des Röhrenrades 15 erstreckt. Die Luft wird über ein nicht näher veranschaulichtes, außerhalb des Beckens 2 angeordnetes Gebläse über eine Luftleitung 19 der Luftleitung 18 zugeführt. Der Luftantrieb erzeugt Luft mit einem Druck von 0,3 bis 1,0 bar.

Wie insbesondere der Darstellung der Figur 1 zu entnehmen ist, wird die Luft unterhalb des Röhrenrades 15 aus der Luftleitung 18 ausgegeben, derart, dass die Luft, bezogen auf die Drehrichtung 16 des Rades, hinter dessen unterem Totpunkt in die Kammern 13 eintritt. Mit der jeweiligen Kunststoffplatte 12 ist ein Formteil 20 verbunden, das die besondere Aufgabe hat, einen Großteil der aus der Luftleitung 18 ausgegebenen Luft, dargestellt durch die diversen Blasen 21, aufzufangen und in die Kammer 13 zu leiten. Dieses Teil 20 kann unterschiedlichste Formen aufweisen und ist deshalb als Formteil bezeichnet. Die jeweilige Kunststoffplatte 12 und das dieser zugeordnete Formteil 20 sind als Eingussteil ausgebildet.

Bei der Ausführungsform nach den Figuren 1 bis 3 ist das Formteil 20, ausgehend von der eigentlichen Röhre 9, entgegen der Drehrichtung 16, jedoch mit einer Komponente radial nach außen, bezogen auf die Welle 6 des Röhrenrades 15 positioniert. Dies bedingt, dass bei derjenigen Röhre 9, die oberhalb der aus der Druckluftleitung 18 aufsteigenden Blasen 21 angeordnet ist, das Formteil 20 ungefähr vertikal orientiert ist. Bei der jeweiligen Röhre 9 ist ferner Besonderheit, dass sie angrenzend auf den der Öffnung 10 abgewandten Bereich der Röhre 9 bzw. der jeweiligen Kunststoffplatte 12 eine nach außen gerichtete Ausbuchtung 22 aufweist.

In der Figur 1 ist für die jeweilige Röhre 9, das heißt für die zwischen zwei benachbarten Kunststoffplatten 12 gebildete Kammer 13, der Füllstand veranschaulicht und dort der Flüssigkeitsspiegel mit der Bezugsziffer 23 bezeichnet.

Wie bereits dargelegt, wird das Röhrenrad 15 durch den Luftantrieb 17 in Drehung versetzt. Die aus der Luftleitung 18 ausgegebenen Blasen 21, somit komprimierte Luft, wird bei Drehung des Röhrenrades 15 weitgehend durch das Formteil 20 der Öffnung 10 zugeleitet und gelangt somit in die der jeweiligen Öffnung 10 zugeordnete Kammer. Das Röhrenrad 15 dreht sich in Drehrichtung 16 weiter und es gelangt Luft in die folgende Röhre 9. Figur 1 veranschaulicht, dass, ausgehend von der Röhre 9, die sich unmittelbar oberhalb der Luftleitung 18 befindet, die Kammern 13 größtenteils mit Luft gefüllt sind. Erreicht die Röhre 9 eine Stellung, die einer Stellung des kleinen Zeigers bei ungefähr 2.00 Uhr entspricht, kann das Formteil 20 nicht mehr die Luft vollständig in der Kammer 13 zurückhalten, so dass die Luft an der radial äußeren Kante des Formteils 20 vorbei nach oben perlt. Die Röhre 9 tritt über den Wasserspiegel 3 hinaus und es verbleibt Flüssigkeit in der jeweiligen Röhre 9. Bei einer weiteren Drehung des Röhrenrades 15 und Erreichen der Stellung der Röhre 9 von etwa 11.00 Uhr taucht die Röhre 9 wieder in die Flüssigkeit ein und nimmt, insbesondere aufgrund der Ausbuchtung 22, die einen immer nach oben geschlossenen Hohlraum darstellt, eine Luftblase mit unter die Wasseroberfläche 3. Im weiteren Verlauf der Drehung verhindert die Röhre 9, insbesondere die Ausbuchtung 22, dass die Luftblase nach oben steigt. Die Luftblase wird, da der Wasserdruck beim weiteren Drehen des Röhrenrades 15 und damit bei Positionierung der Röhre 9 weiter unten im Becken 2 steigt, stärker komprimiert. Nach Überschreiten des unteren Totpunktes gelangt die Röhre 9 wieder in den Bereich der Luftleitung 18.

Aufgrund der Gestaltung des Röhrenrades und des Luftantriebs 17 befindet sich nahezu während des gesamten Durchgangs der Röhre 9 durch das Wasser Luft in den Kammern 13. Die Luft bestreicht in Wechselwirkung während der Rotation den biologischen Rasen. Wegen der sinusförmigen Gestaltung der Kunststoffplatte im Bereich radial außerhalb des Flansches 14 ist während der Rotation des Rasens ein höchster Sauerstoffaustausch im Bereich des Rasens zu verzeichnen. Dieses erhöht den Wirkungsgrad der Abwasserreinigung signifikant.

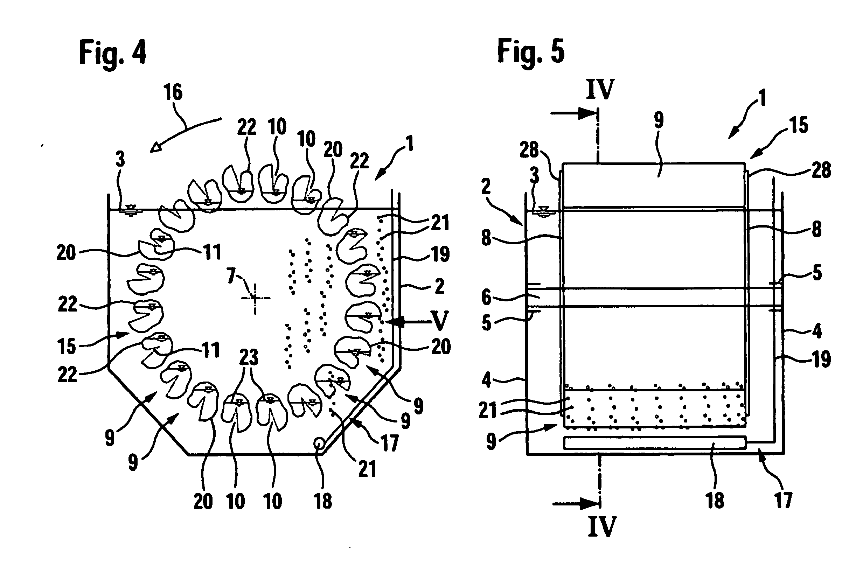

Die Ausführungsform nach den Figuren 4 und 5, die gleichfalls ein Röhrenrad 15 veranschaulicht, unterscheidet sich von derjenigen nach den Figuren 1 bis 3 nur dadurch, dass die jeweilige Röhre 9 bzw. die jeweiligen Kunststoffplatten 12 mit Formteil 20 anders gestaltet sind. Statt des geraden, plattenförmigen Formteils 20, gemäß der Ausführungsform nach den Figuren 1 bis 3, ist bei der Ausführungsform nach den Figuren 4 und 5 ein Formteil 20 vorgesehen, das sich als Ausbuchtung darstellt, die sich an die Röhre 9 anschließt und ähnlich der Ausbuchtung 22 gestaltet ist. Diese Gestaltung des Formteils 20 bedingt ein größeres Volumen der Kammer 13 zur Aufnahme der Luft. Abgesehen hiervon gelangt Luft, die in der Position der Röhre 9 bei einer Stellung von etwa 5.00 Uhr nicht mehr aufgenommen werden kann, außen an dieser Röhre 9 vorbei in den Bereich der in Drehrichtung 16 vorlaufenden Röhre 9 und durch deren Öffnung 10 in die der Röhre 9 zugeordneten Kammern 13. Der Einfachheit halber sind diejenigen Bauteile der beiden Ausführungsformen, die in ihrer Funktion übereinstimmen, mit denselben Bezugsziffern bezeichnet. Dies gilt auch für die nachfolgend zu beschreibende weitere Ausführungsform.

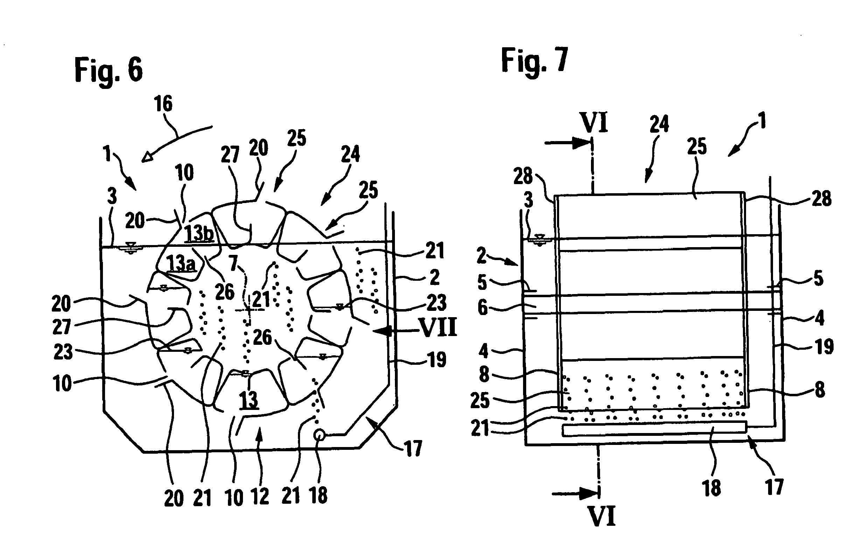

Die Figuren 6 und 7 veranschaulichen eine Ausführungsform, bei der das Rad als Zellrad 24 ausgebildet ist. Die jeweilige Zelle 25 ist durch eine Vielzahl ineinander gesteckter Kunststoffplatten 12 gebildet, so dass sich, in der beschriebenen Art und Weise zwischen benachbarten Kunststoffplatten 12 die Kammer 13 ergibt. Radial außen ist die jeweilige Kunststoffplatte 12 in der beschriebenen Art und Weise mit dem Formteil 20 versehen, das plattenförmig gemäß der Ausführungsform nach den Figuren 1 bis 3 gestaltet ist. Dieses in Drehrichtung 16 des Zellrades 24 vorlaufende Formteil 20 begrenzt die Öffnung 10 der jeweiligen Kammer 13. Das Zellrad 24 unterscheidet sich von dem Röhrenrad 15 grundsätzlich dadurch, dass die jeweilige Zelle 25 radial innen, bezogen auf die jeweilige Kammer 13, mit einer weiteren Öffnung 26 versehen ist und überdies die Kammer 13, der Öffnung 26 vorlaufend, mit einem Trennsteg 27 versehen ist, der auf das Formteil 20 zu gerichtet ist und sich etwa über die halbe radiale Ausdehnung der Kammer 13 erstreckt. Hierdurch werden die Kammerhälften 13a und 13b gebildet.

Tritt Luft bei der Stellung der jeweiligen Zelle 25 von etwa 5.00 Uhr durch die Öffnung 10 benachbarter Kunststoffplatten 12 in die Kammer 13 ein, gelangt sie in die Kammer 13a. Die Luft verbleibt dort, bis sie, wenn die Zelle 25 etwa die Stellung 1.00 Uhr erreicht hat, durch die Öffnung 10 austritt. Beim weiteren Drehen des Zellrades 24 tritt Wasser durch die andere Öffnung 26 in die Kammer 13b ein. Bei einer Drehung des Zellrades 24 in den Bereich von 11.00 Uhr verhindert das Formteil 20, dass die Flüssigkeit in die Kammer 13 eintritt. Stattdessen tritt durch die Öffnung 10 Luft in die Kammer 13b und wird dort zurückgehalten. Bei einer Stellung des Zellrades 24, die etwa 8.00 Uhr entspricht, verlässt die Luft, mit fortschreitender Drehung, die Kammer 13b durch die Öffnung 26. Bei dieser Ausführungsform gelangt somit die Luft stärker in den zentralen Bereich des Zellrades 24, wie es durch die diversen Blasen 21 veranschaulicht ist.

## Patentansprüche

1. Einrichtung zur aeroben biologischen Reinigung von Abwässern, mit einem Becken (2) zur Aufnahme des Abwassers, einem im Becken (2) um eine horizontale Achse (7) drehbaren Rad (15), wobei das Rad (15) eine Vielzahl von in Umfangsrichtung und axial hintereinander angeordneten Kammern (13) aufweist, wobei jede Kammer (13) mit einer Öffnung (10) versehen ist, die im oberen Totpunkt des Rades (15) aus dem Abwasser aufgetaucht und nach oben gerichtet ist, sowie im unteren Totpunkt des Rades (15) in das Abwasser eingetaucht und nach unten gerichtet ist, wobei die Kammer (13) einen beim Eintauchen in das Abwasser nach oben geschlossenen Hohlraum zur Mitnahme einer Luftblase unter die Wasseroberfläche aufweist, wobei ferner ein Luftantrieb (17) für das Rad (15) vorgesehen ist, wobei die Luft unterhalb des Rades (15) aus einer Luftleitung (18) ausgegeben wird, derart, dass sie, bezogen auf die Drehrichtung (16) des Rades (15), hinter dessen unteren Totpunkt in die Kammern (13) eintritt, sowie mit der jeweiligen Kammer (13) ein radial nach außen gerichtetes Formteil (20) verbunden ist, das von der Luftleitung (18) ausgegebene Luft in die Öffnung (10) dieser Kammer (13) oder die Öffnung (10) der zu dieser Kammer (13) in Drehrichtung (16) vorlaufenden Kammer (13) leitet.

2. Einrichtung nach Anspruch 1, **dadurch gekennzeichnet, dass** das Rad als Zellrad (24) oder Röhrenrad (15) ausgebildet ist.

3. Einrichtung nach Anspruch 1 oder 2, **dadurch gekennzeichnet, dass** das Formteil (20) die Luft in die Öffnung (10) der Kammer (13), die das Formteil (20) aufnimmt, leitet, wobei das Formteil (20) in Richtung der Öffnung (10) gerichtet ist.

4. Einrichtung nach Anspruch 3, **dadurch gekennzeichnet, dass** das Formteil (20), bezogen auf die Kammer (13), nach außen gewölbt ist.

5. Einrichtung nach Anspruch 3 oder 4, **dadurch gekennzeichnet, dass** das Formteil (20) die Öffnung (10) überlappt und ein Auffangraum für die Luft zwischen der Kammer (13) und dem Formteil (20) gebildet ist.

6. Einrichtung nach Anspruch 1 oder 2, **dadurch gekennzeichnet, dass** das mit der Kammer (13) verbundene Formteil (20) die Luft in die Öffnung (10) der zu dieser Kammer (13) vorlaufenden Kammer (13) leitet, wobei bei Aufgabe der Luft auf das Formteil (20) dieses, in vertikaler Flucht gesehen, die Öffnung (10) der vorlaufenden Kammer (13) überlappt.

7. Einrichtung nach einem der Ansprüche 1 bis 6, **dadurch gekennzeichnet, dass** die jeweilige Kammer (13) etwa zu 30 % bis 80 % ihres Kammervolumens mit Luft füllbar ist.

8. Einrichtung nach einem der Ansprüche 1 bis 7, **dadurch gekennzeichnet, dass** das Rad (15) mit 5% bis 15 %, insbesondere 10 % seines Raddurchmessers aus dem im Becken (2) befindlichen Abwassers ragt.

9. Einrichtung nach einem der Ansprüche 1 bis 8, **dadurch gekennzeichnet, dass** die Luftleitung (18) parallel zur Drehachse (7) des Rades (15) angeordnet ist und sich im wesentlichen über die axiale Länge des Rades (15) erstreckt, wobei die Luftleitung (18) mit einer Mehrzahl von Ausgabeöffnungen zur Ausgabe der Luft über die Länge der Luftleitung (18) versehen ist.

10. Einrichtung nach einem der Ansprüche 1 bis 9, **gekennzeichnet durch** einen Luft mit einem Druck von 0,3 bar bis 1 bar erzeugenden Luftantrieb.

11. Einrichtung nach einem der Ansprüche 1 bis 10, **dadurch gekennzeichnet, dass** die jeweilige Kammer (13) durch zwei ineinander gesteckte Platten (12) insbesondere Kunststoffplatten (12) gebildet ist, wobei die jeweilige Platte (12) und das dieser zugeordnete Formteil (20) eine Baueinheit bilden.

## Claims

1. Apparatus for the aerobic biological cleaning of sewage, having a basin (2) for accommodating the sewage, and having a wheel (15) which can be rotated about a horizontal axis (7) in the basin (2), wherein the wheel (15) has a multiplicity of circumferentially directed chambers (13) arranged axially one behind the other, wherein each chamber (13) is provided with an opening (10) which is clear of the sewage, and directed upwards, in the top dead-centre position of the wheel (15) and is immersed in the sewage, and directed downwards, in the bottom dead-centre position of the wheel (15), wherein the chamber (13) has a cavity which is closed in the upward direction upon immersion in the sewage in order to entrain an air bubble beneath the water surface, wherein, furthermore, an air drive (17) is provided for the wheel (15), and wherein the air is discharged from an air line (18) beneath the wheel (15) such that it enters into the chambers (13) downstream of the bottom dead-centre position of the wheel (15), as seen in the direction of rotation (16) of the latter, and the respective chamber (13) has connected to it a radially outwardly directed moulding (20) by means of which air discharged from the air line (18) is directed into the opening (10) of this chamber (13) or the opening (10) of the chamber (13) which precedes this chamber (13), as seen in the direction of rotation (16).

2. Apparatus according to Claim 1, **characterized in that** the wheel is designed in the form of a cell wheel (24) or tube wheel (15).

3. Apparatus according to Claim 1 or 2, **characterized in that** the moulding (20) directs the air into the opening (10) of the chamber (13) which accommodates the moulding (20), the moulding (20) being oriented in the direction of the opening (10).

4. Apparatus according to Claim 3, **characterized in that** the moulding (20), in relation to the chamber (13), is curved outwards.

5. Apparatus according to Claim 3 or 4, **characterized in that** the moulding (20) overlaps the opening (10) and forms a collecting space for the air between the chamber (13) and the moulding (20).

6. Apparatus according to Claim 1 or 2, **characterized in that** the moulding (20), which is connected to the chamber (13), directs the air into the opening (10) of the chamber (13) which precedes this chamber (13), wherein, when the air is delivered onto the moulding (20), the latter, as seen in vertical alignment, overlaps the opening (10) of the preceding chamber (13).

7. Apparatus according to one of Claims 1 to 6, **characterized in that** the respective chamber (13) can be filled with air up to approximately 30% to 80% of its volume.

8. Apparatus according to one of Claims 1 to 7, **characterized in that** the wheel (15) has 5% to 15%, in particular 10%, of its wheel diameter projecting out of the sewage located in the basin (2).

9. Apparatus according to one of Claims 1 to 8, **characterized in that** the air line (18) is arranged parallel to the axis of rotation (7) of the wheel (15) and extends essentially over the axial length of the wheel (15), wherein the air line (18) is provided with a plurality of discharge openings for discharging the air over the length of the air line (18).

10. Apparatus according to one of Claims 1 to 9, **characterized by** an air drive which generates air with a pressure of 0.3 bar to 1 bar.

11. Apparatus according to one of Claims 1 to 10, **characterized in that** the respective chamber (13) is formed by two panels (12), in particular plastic panels (12), inserted one inside the other, wherein the respective panel (12) and the moulding (20) assigned thereto form a structural unit.

## Revendications

1. Dispositif pour le traitement biologique aérobie d'eaux usées, comprenant un bassin (2) pour recevoir les eaux usées, une roue (15) pouvant tourner dans le bassin (2) autour d'un axe horizontal (7), la roue (15) présentant une pluralité de chambres (13) disposées les unes derrière les autres axialement et dans la direction périphérique, chaque chambre (13) étant munie d'une ouverture (10) qui émerge hors des eaux usées au point mort haut de la roue (15) et qui est orientée vers le haut, et qui est immergée dans les eaux usées au point mort bas de la roue (15) et qui est orientée vers le bas, la chambre (13) présentant une cavité fermée vers le haut lors de l'immersion dans les eaux usées, pour entraîner un soufflage d'air sous la surface de l'eau, un entraînement d'air (17) pour la roue (15) étant en outre prévu, l'air sortant hors d'une conduite d'air (18) sous la roue (15) de telle sorte qu'il entre dans les chambres (13) derrière le point mort bas de la roue (15), par rapport au sens de rotation (16) de celle-ci et une pièce façonnée (20) orientée radialement vers l'extérieur étant connectée à chaque chambre (13), laquelle guide l'air sortant de la conduite d'air (18) dans l'ouverture (10) de cette chambre (13) ou dans l'ouverture (10) de la chambre (13) précédant cette chambre (13) dans le sens de rotation (16).

2. Dispositif selon la revendication 1, **caractérisé en ce que** la roue est réalisée sous forme de roue cellulaire (24) ou de roue tubulaire (15).

3. Dispositif selon la revendication 1 ou 2, **caractérisé en ce que** la pièce façonnée (20) guide l'air dans l'ouverture (10) de la chambre (13) qui reçoit la pièce façonnée (20), la pièce façonnée (20) étant orientée dans la direction de l'ouverture (10).

4. Dispositif selon la revendication 3, **caractérisé en ce que** la pièce façonnée (20) est cintrée vers l'extérieur par rapport à la chambre (13).

5. Dispositif selon la revendication 3 ou 4, **caractérisé en ce que** la pièce façonnée (20) recouvre l'ouverture (10) et un espace de collecte pour l'air entre la chambre (13) et la pièce façonnée (20) est formé.

6. Dispositif selon la revendication 1 ou 2, **caractérisé en ce que** la pièce façonnée (20) connectée à la chambre (13) guide l'air dans l'ouverture (10) de la chambre (13) précédant cette chambre (13), la pièce façonnée (20), lorsqu'elle est chargée d'air, vu en alignement vertical, recouvrant l'ouverture (10) de la chambre (13) précédente.

7. Dispositif selon l'une quelconque des revendications 1 à 6, **caractérisé en ce que** la chambre respective (13) peut être remplie d'air à raison de 30% à 80% de son volume de chambre.

8. Dispositif selon l'une quelconque des revendications 1 à 7, **caractérisé en ce que** la roue (15) dépasse hors des eaux usées se trouvant dans le bassin (2) par 5% à 15%, notamment par 10% de son diamètre de roue.

9. Dispositif selon l'une quelconque des revendications 1 à 8, **caractérisé en ce que** la conduite d'air (18) est disposée parallèlement à l'axe de rotation (7) de la roue (15) et s'étend essentiellement sur la longueur axiale de la roue (15), la conduite d'air (18) étant pourvue d'une pluralité d'ouvertures de sortie pour la sortie de l'air sur la longueur de la conduite d'air (18).

10. Dispositif selon l'une quelconque des revendications 1 à 9, **caractérisé par** un entraînement d'air générant de l'air à une pression de 0,3 bar à 1 bar.

11. Dispositif selon l'une quelconque des revendications 1 à 10, **caractérisé en ce que** la chambre respective (13) est formée par deux plaques (12) emboîtées l'une dans l'autre, en particulier des plaques en plastique (12), la plaque respective (12) et la pièce façonnée (20) qui lui est associée formant une unité constructive.
